(19) Europäisches Patentamt
European Patent Office
Office européen des brevets

(11) EP 0 934 947 B1

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(51) Int Cl.[7]: **C07F 7/18**

(21) Anmeldenummer: **98124625.9**

(22) Anmeldetag: **23.12.1998**

(54) **Verfahren zur Herstellung von 3-Glycidyloxypropyltrialkoxysilanen**

Process for preparing 3-Glycidyloxypropyltrialkoxysilanes

Procédé pour la préparation de 3-glycidyloxypropyltrialcoxysilanes

(84) Benannte Vertragsstaaten:
**BE DE ES FR GB IT NL**

(30) Priorität: **09.02.1998 DE 19805083**

(43) Veröffentlichungstag der Anmeldung:
**11.08.1999 Patentblatt 1999/32**

(73) Patentinhaber: **Degussa AG**
**40474 Düsseldorf (DE)**

(72) Erfinder:
- **Bade, Stefan Dr.**
  **79618 Rheinfelden (DE)**
- **Monkiewicz, Jaroslaw Dr.**
  **79618 Rheinfelden (DE)**
- **Schön, Uwe Dr.**
  **79618 Rheinfelden (DE)**

(56) Entgegenhaltungen:
**EP-A- 0 548 974**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 934 947 B1

## Beschreibung

Die Erfindung betrifft ein Verfahren zur Herstellung von 3-Glycidyloxypropyltrialkoxysilanen der allgemeinen Formel

$$CH_2(O)CHCH_2\text{-}O\text{-}(CH_2)_3Si(OR)_3 \qquad (I),$$

in der R für einen Alkylrest steht, durch Umsetzung von Allylglycidylether

$$CH_2(O)CHCH_2\text{-}O\text{-}CH_2CH{=}CH_2 \qquad (II)$$

mit einem Trialkoxysilan der allgemeinen Formel

$$HSi(OR)_3 \qquad (III),$$

in der R wiederum einen Alkylrest bedeutet, in einer Platin-katalysierten Hydrosilylierungsreaktion.

3-Glycidyloxypropyltrialkoxysilane (I) sind wichtige technische Zwischen- oder Endprodukte in der Organosilanchemie. Sie werden u. a. als Haftvermittler bei Verbundmaterialien verwendet, z. B. in der Lack- und Glasfaserindustrie, in der Gießereitechnik und in der Klebstoffindustrie. Eine wichtige Rolle spielen die 3-Glycidyloxypropyltrialkoxysilane (I) auch bei der Beschichtung von optischen Gläsern.

3-Glycldyloxypropyltrialkoxysilane (I) werden durch Umsetzung eines ein Wasserstoffatom tragenden Trialkoxysilans (III) ("H-Silans") mit Allylglycidylether (II) in einer Hydrosilylierungsreaktion nach der Reaktionsgleichung

$$CH_2(O)CHCH_2OCH_2CH{=}CH_2 + HSi(OR)_3 \rightarrow CH_2(O)CHCH_2O(CH_2)_3Si(OR)_3$$

hergestellt. Dabei steht R wiederum für einen Alkylrest. Mit R = Methyl wird die Herstellung von 3-Glycidyloxypropyltrimethoxysilan ("GLYMO") beschrieben, mit R = Ethyl die Herstellung von 3-Glycidyloxypropyltriethoxysilan ("GLYEO"). Als Nebenprodukte treten bei dieser Reaktion zwei Isomere von (I) auf:

$$CH_2(O)CHCH_2\text{-}O\text{-}CH_2CH[Si(OR)_3]CH_3 \qquad (IV)$$

das auch als iso-3-Glycidyloxypropyltrialkoxysilan bezeichnet wird, sowie eine achtgliedrige heterocyclische Verbindung der Formel

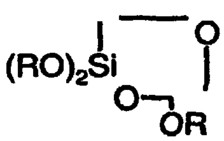

(V)

Weitere Nebenprodukte sind Glycidyloxytrialkoxysilan, Propyltrialkoxysilan, 1-Methylvinylglycidylether und Tetraalkoxysilan sowie Hochsiederkomponenten.

Hydrosilylierungsreaktionen von H-Silanen mit Verbindungen, die eine C=C-Doppelbindung enthalten, werden kontinuierlich oder diskontinuierlich und in jedem Fall in Gegenwart eines Edelmetall-Katalysators durchgeführt. 3-Glycidyloxypropyltrialkoxysilane (I) werden im allgemeinen in einem homogenen System mit Hexachloroplatin(IV)-säure als Katalysator hergestellt (siehe z. B. EP 0277023, EP 0288286, JP 128763 und DE 21 59 991). Nachteile des homogen katalytischen Verfahrens sind die schwierige Temperaturkontrolle während der Reaktion, die zwangsläufig erforderliche Abtrennung des Katalysators und die verstärkte Bildung von Nebenprodukten durch Folgereaktionen des Zielproduktes unter dem Einfluß des homogen gelösten Katalysators und/oder infolge von unbeabsichtigten "Ausreißern" bei der Temperaturführung. Insbesondere wenn Katalysator mit in die destillative Aufarbeitung gelangt, kommt

es während der Destillation zur Bildung der erwähnten Isomeren (IV) und (V) sowie von Dimeren und Trimeren der 3-Glycidyloxypropyltrialkoxysilane (I). Weiterhin sind Verfahren unter Verwendung von Hexachloroplatinsäure keine chlorfreien Verfahren, was zu einer Beeinträchtigung der Produktqualität führt und beispielsweise die Zersetzung von Trialkoxysilanen (II) zu Tetraalkoxysilanen fördert.

In EP 0548974 werden heterogene Edelmetallkatalysatoren beschrieben, nämlich Rhodium und Platin als Metalle oder in Form von Verbindungen, die Metalle als Trägermaterial enthalten und u. a. für die Herstellung von 3-Glycidyloxypropyltrialkoxysilanen (1) verwendbar sind. Weiterhin werden auch auf nichtmetallischen Trägern immobilisierte Edelmetall-Komplexe beschrieben, die ebenfalls zur Herstellung von 3-Glycidyloxypropyltrialkoxysilanen (I) durch Hydrosilylierung eingesetzt werden.

In EP 0262642 werden Katalysatoren auf Basis von Rhodium für die Herstellung von 3-Glycidyloxypropyltrialkoxysilanen (I) beschrieben, und zwar sowohl Katalysatoren für die homogene als auch solche für die heterogene Katalyse. Die Rhodiumkatalysatoren für die homogene Katalyse ergeben Ausbeuten an 3-Glycidyloxypropyltrialkoxyslianen (I) von etwa 70 %, diejenigen für die heterogene Katalyse, die 5 % Rhodium auf Aktivkohle als Träger enthalten, Ausbeuten von 70 bis 80%. Der Vorteil der Rhodiumkatalysatoren gegenüber Platinkatalysatoren soll in der geringeren Empfindlichkeit der ersteren gegenüber Stickstoffverbindungen liegen, wodurch die Ausbeute an 3-Glycidyloxypropyltrialkoxysilanen (I) gesteigert wird und die Katalysatoren einen geringeren Aktivitätsverlust erleiden.

In US-A 4 736 049 werden allgemein Hydrosilylierungsreaktionen beschrieben, die mit Verbindungen des Platins oder metallischem Platin homogen oder heterogen katalysiert werden und in Gegenwart eines Carbonsäureamids der allgemeinen Formel $RCONR_1R_2$ ablaufen. An Trägerkatalysatoren wird lediglich Platin auf Kohle erwähnt. Die Gegenwart des Carbonsäureamids soll allgemein die Entstehung des gewünschten β-Addukts begünstigen. Nach EP 0 262 642 sind allerdings Stickstoffverbindungen für den Spezialfall der Herstellung von Glycidylpropyltrialkoxysilanen (I) mit Platinkatalysatoren qualitätsmindernd und werden daher als ungünstig angesehen.

Eine Aufgabe der Erfindung besteht darin, ein verbessertes, möglichst einfaches, heterogen katalysiertes Verfahren zur Herstellung von 3-Glycidyloxypropyltrialkoxysilanen (I) bereitzustellen.

Überraschenderweise wird diese Aufgabe gelöst durch ein Verfahren zur Herstellung von 3-Glycidyloxypropyltrialkoxysilanen der allgemeinen Formel

$$CH_2(O)CHCH_2\text{-}O\text{-}(CH_2)_3Si(OR)_3 \qquad (I),$$

in der R für einen Alkylrest steht, durch Umsetzung von Allylglycidylether

$$CH_2(O)CHCH_2\text{-}O\text{-}CH_2CH{=}CH_2 \qquad (II)$$

mit einem Trialkoxysilan der allgemeinen Formel

$$HSi(OR)_3 \qquad (III),$$

in der R wiederum einen Alkylrest bedeutet, in einer heterogenen, Platin-katalysierten Hydrosilylierungsreaktion, wobei als Katalysator ein Platin(0)-Katalysator auf einem nichtmetallischen Trägerstoff mit 0,01 bis 1,0 % Platin am Katalysator eingesetzt und die Reaktion an einem Katalysatorfestbett in einem Rohrreaktor mit oder ohne Kreislauf, einem Rohrbündelreaktor, einem Hordenreaktor oder einem Kreuzstromreaktor durchgeführt wird.

Gegenstand der vorliegenden Erfindung ist somit ein Verfahren zur Herstellung von 3-Glycidyloxypropyltrialkoxysilanen der allgemeinen Formel

$$CH_2(O)CHCH_2\text{-}O\text{-}(CH_2)_3Si(OR)_3 \qquad (I),$$

in der R für einen Alkylrest steht, durch Umsetzung von Allylglycidylether

$$CH_2(O)CHCH_2\text{-}O\text{-}CH_2CH{=}CH_2 \qquad (II)$$

mit einem Trialkoxysilan der allgemeinen Formel

$$HSi(OR)_3 \qquad (III),$$

in der R wiederum einen Alkylrest bedeutet, in einer heterogenen, Platinkatalysierten Hydrosilylierungsreaktion, das dadurch gekennzeichnet, daß die Reaktion an einem Katalysatorfestbett in einem Rohrreaktor mit oder ohne Kreislauf, einem Rohrbündelreaktor, einem Hordenreaktor oder einem Kreuzstromreaktor durchgeführt wird und man als Katalysator einen Platin(0)-Katalysator auf einem nichtmetallischen Trägerstoff einsetzt, wobei der Massenanteil des Platins am Katalysator 0,01 bis 1,0 % beträgt.

Das Verfahren nach der Erfindung ist mit einer Reihe von überraschenden Vorteilen verbunden:

- Im Gegensatz zur homogen katalysierten Hydrosilylierung treten keine Verluste an Katalysator ein, muß der Katalysator nicht über entsprechende Dosiersysteme in die Reaktion eingeführt und nicht vom Reaktionsgemisch abgetrennt werden.
- Infolge einer minimierten Bildung von Nebenprodukten liegt die Selektivität der Bildung der 3-Glycidylpropyltrialkoxysilane (I) bei >90 %.
- Der Katalysator und alle Komponenten sind halogenid frei, besonders chloridfrei, wodurch die Zersetzung von Trialkoxysilanen (III) zu Tetraalkoxysilanen minimiert wird.
- Temperaturführung kann gut kontrolliert werden, was zur Selektivitätsoptimierung beiträgt. Bei Temperaturen bis zu etwa 140°C werden hochsiedende lineare sowie niedrigsiedende cyclische Nebenprodukte nur in sehr geringen Mengen gebildet.
- Das Platin braucht auf dem Trägerstoff nur in sehr kleinen Konzentrationen von 0,01 bis 1 Masse-% vorhanden zu sein.
- Zudem Ist der Preis für Platin deutlich niedriger als der für Rhodium.
- Der Katalysator läßt sich in einfacher Weise durch Tränken oder Besprühen des Trägerstoffs mit einer Lösung einer Platin(II)- oder Platin(IV)-Verbindung, Trocknen und anschließende Reduktion der Platin(II)- oder Platin(IV) -Verbindung zum Pt(O) in Wasserstoffatmosphäre herstellen.
- Die Bildung der heterocyclischen Verbindung (V) wird sicher verhindert, weil kein homogen gelöster Katalysator in die Destillation gelangen kann.
- Infolgedessen ist das Reaktionsgemisch leichter auftrennbar, weil keine heterocyclische Verbindung (V) abgetrennt werden muß.
- Die Isomerisierung des Allylglycidylethers (II) zum 1-Methylvinylglycidylether, die in einem homogenen Reaktionssystem begünstigt wird, wird minimiert, so daß man mit weniger Allylglycidylether (II) auskommt.
- Das Verfahren wird ohne ein Carbonsäureamid durchgeführt, was die Gewinnung von reinem Hydrosilylierungsprodukt erleichtert.

Die Alkylreste in den Trialkoxysilanen (III) [und damit auch in den 3-Glycidyloxypropyltrialkoxysilanen (I)] sind vorteilhaft Alkylreste mit 1 bis 4 Kohlenstoffatomen und insbesondere Methyl- oder Ethylreste. Trimethoxy- und Triethoxysilan sind, ebenso wie Allylglycidylether (II), im Handel erhältlich oder durch Reaktion von Trichlorsilan mit Methanol oder Ethanol herstellbar.

Als Ausgangsstoffe für den Pt(O)-Anteil des Trägerkatalysators eignen sich beliebige, vorzugsweise in Wasser oder aber in anderen Lösemitteln lösliche Platin(II)- oder Platin(IV)-Verbindungen. wie Platin(II)-nitrat, Platin(II)-acetylacetonat, Platin(IV)-Chlorid, Platin(IV)-acetat, Hexachloroplatin(IV)-säure sowie deren Komplexe, z.B. mit symm-Divinyltetramethyldisiloxan. Geeignete Trägerstoffe sind z.B. Aktivkohle, Aluminiumoxid, gefälltes oder pyrogenes Siliciumdioxid, Silikate, Magnesiumoxid sowie natürliche oder synthetische Zeolithe. Bevorzugt werden großoberflächige Trägerstoffe, so daß der fertige Katalysator eine spezifische Oberfläche von 10 bis 400 $m^2/g$ hat, gemessen nach der Methode von Brunauer, Emmett und Teller ["BET"-Methode; P. W. Atkins, Physical Chemistry, 4. Auflage, S. 779 ff., Oxford University Press (1986)] mit $N_2$-Adsorption.

Zur Herstellung tränkt oder besprüht man den Trägerstoff mit einer vorzugsweise wäßrigen, in der Regel 0,1- bis 10-masseprozentigen Lösung der Platin(II)- oder Platin(IV)-Verbindung. Die Menge und bzw. oder die Konzentration der Lösung werden vorteilhaft so bemessen, daß der Platin(0)-Gehalt des fertigen Katalysators 0,01 bis 1 Masseprozent, vorteilhaft 0,02 bis 0,2 Masseprozent beträgt. Größere Anteile an Platin schaden nicht, bringen aber keinen entsprechenden Vorteil. Nach dem Tränken wird der Katalysatorvorläufer mit der Platinverbindung getrocknet, z. B. im Luftstrom bei 80 °C, und durch Überleiten von Wasserstoff bei 80 bis 140 °C wird die Platinverbindung zum elementaren Platin(O) reduziert und dadurch der Katalysator hergestellt. Die Reduktion wird vorteilhaft an Ort und Stelle, also im Reaktor für die Hydrosilylierungsreaktion durchgeführt.

Die Hydrosilylierungsreaktion wird vorteilhaft ohne Mitverwendung eines inerten Lösemittels und bei Temperaturen von 20 bis 200 °C, insbesondere von 60 bis 160°C durchgeführt. Bei tieferen Temperaturen ist die Reaktionsgeschwindigkeit für ein praktikables Verfahren zu gering, bei höheren Temperaturen bilden sich Nebenprodukte in erheblichem Maße. Das Verfahren kann bei Atmosphärendruck (1 bar abs.) durchgeführt werden. Insbesondere bei feinteiligen Trägerstoffen kann man jedoch das Durchströmen der Katalysatorzone fördern, indem man erhöhten Druck, beispielsweise bis zu 20 bar abs., anwendet. Die Verweilzeit beträgt bei den genannten Temperaturen im allgemeinen 1 bis 100 Minuten, insbesondere 10 bis 30 Minuten. Das molare Verhältnis der Edukte (II) und (III) kann In weiten Grenzen schwanken und liegt im allgemeinen im Bereich von 0,1 bis 10, insbesondere von 0,25 bis 4.

Die Hydrosilylierung nach der Erfindung wird zweckmäßig an einem fest angeordneten Katalysator (Festbett) durchgeführt. Als Reaktoren eignen sich z. B. ein Rohrreaktor mit oder ohne Kreislauf, ein Rohrbündelreaktor, ein Hordenreaktor oder ein Kreuzstromreaktor. Das Verfahren kann z. B. kontinuierlich durchgeführt werden, indem man den Katalysator in einem senkrecht stehenden Rohrreaktor anordnet und die Ausgangsstoffe, jeweils für sich oder als Mischung über den Katalysator rieseln läßt, der durch Außenheizung auf der Reaktionstemperatur gehalten wird. Bei einer diskontinuierlichen Variante des Verfahrens führt man das Reaktionsgemisch nach dem Passieren des Katalysatorfestbettes über einen äußeren Kreislauf auf den Katalysator zurück und läßt es erneut über das Festbett rieseln. Diese Prozedur wird solange wiederholt, bis der gewünschte Umsatzgrad erreicht ist Die gesamte Verweilzeit wird auf diese Weise in eine der Zahl der Umläufe entsprechende Anzahl von Teilzelten zerlegt. Unabhängig von der Art der Reaktionsführung wird das Reaktionsgemisch in jedem Fall durch kontinuierliche oder diskontinuierliche Destillation in seine Bestandteile zerlegt.

Man erhält auf die erfindungsgemäße Weise die 3-Glycidyloxypropyltrialkoxysilane (I) bei Umsätzen von bis zu 100 % mit Raum-Zeit-Ausbeuten von bis zu 1 000 mol/(h·$g_{Pt}$) und Selektivitäten von bis zu 95 %.

Die folgenden Beispiele werden gegeben, um das Verfahren nach der Erfindung welter zu erläutern, nicht jedoch um seinen Anwendungsbereich zu begrenzen, wie er in den Patentansprüchen dargelegt ist.

Beispiel 1

In einem diskontinuierlich betriebenen Rohrreaktor mit externem Kreislauf, in dem sich das Katalysatorbett befindet, werden die Edukte Allylglycidylether (II) (AGE) und Trimethoxysilan (III) (TMOS) zu 3-Glycidyloxypropyltrimethoxysilan (I) (GLYMO) umgesetzt; eine Kreislaufpumpe sorgt dafür, daß das Katalysatorbett von oben nach unten durchströmt wird. Eingesetzt werden als Katalysator 11,2 g Aktivkohle mit 0,1 Masse-% Platin, hergestellt durch Tränken der Aktivkohle mit einer 5-masseprozentlgen wäßrigen Lösung von Platin(II)-nitrat und Reduzieren der Platin(II) -Verbindung im Wasserstoffstrom (8 h bei 100 °C), sowie als Edukt eine Mischung aus 342g Trimethoxysilan (III) (2,8 mol) und 348g Allylglycidylether (II) (3,05 mol). Die Reaktion wird isotherm bei 120 °C durchgeführt, die Kontaktzeit am Katalysator beträgt bei jedem Umlauf 3 s. Nach 75 min ist 3-Glycidyloxypropyltrimethoxysilan (I) mit einer Selektivität von 92,2 % gebildet worden. Die folgende Tabelle gibt die gaschromatographisch ermittelte Zusammensetzung des Reaktionsgemisches nach Reaktionsende wieder:

| Stoff | Menge (g) |
|---|---|
| Trimethoxysilan (III) | 49,0 |
| Allylglycidylether (II) | 12,2 |
| 3-Glycidyloxypropyltrimethoxysilan (I) | 522,3 |
| 1-Methylvinylglycidylether | 80,45 |
| iso-3-Glycidyloxypropyltrimethoxysilan (IV) | 8,25 |
| Tetramethoxysilan | 17,8 |

Hochsiedende Komponenten werden nicht gebildet, ebenso entsteht keine heterocyclische Verbindung (V). Die Raum-Zeit-Ausbeute liegt bei 158 mol GLYMO/(h·$g_{Pt}$).

Beispiel 2

In einem kontinuierlich betriebenen Festbettreaktor ohne externen Kreislauf mit einem Volumen von 170 $cm^3$ werden Allylglycidylether (II) (AGE) und Trimethoxysilan (III) (TMOS) bei 120 °C und unter einem Druck von 3 bar zu 3-Glycidyloxypropyltrimethoxysilan (I) (GLYMO) umgesetzt. Der Festbettreaktor wird mit 70 g Aktivkohle mit 0,02 Masse-% Platin, in analoger Weise wie der Katalysator des Beispiels 1 hergestellt, als Katalysator gefüllt. Dem Festbettreaktor werden 2,326 mol/h Trimethoxysilan (TMOS) und 2,561 mol/h Allylglycidylether (AGE) zugeführt. Das molare Verhältnis von AGE zu TMOS beträgt somit 1,1:1. Die Zuführung der Edukte erfolgte in flüssiger Phase über Dosierpumpen. Die folgende Tabelle gibt die gaschromatographisch ermittelte Zusammensetzung des Reaktionsgemisches

(Ausgangsstromes) wieder:

| Stoff | Menge (g/h) |
|---|---|
| Trimethoxysilan (III) | 28,4 |
| Allylglycidylether (II) | 8,5 |
| 3-Glycidyloxypropyltrimethoxysilan (I) | 454,7 |
| 1-Methylvinylglycidylether | 59,8 |
| Iso-3-Glycidyloxypropyltrimethoxysilan (IV) | 9,1 |
| Tetramethoxysilan | 19,3 |

Der Umsatz des Trimethoxysilans beträgt 90%, die Selektivität bezüglich des gewünschten GLYMO (I) 91,9%. Die Selektivität bezüglich iso-GLYMO beträgt 1,83 %, diejenige bezüglich Tetramethoxysilan 6,05%. Hochsiedende Komponenten werden nicht gebildet, ebenso entsteht kein heterocyclisches isomeres GLYMO (V). Die Verweilzeit am Katalysator beträgt 16,8 min, die Raum-Zeit-Ausbeute an GLYMO 137,4 mol/(h·$g_{Pt}$). Das Reaktionsgemisch wird entweder diskontinuierlich oder kontinuierlich destillativ aufgearbeitet, wobei nichtumgesetztes TMOS und AGE wieder zum Reaktor zurückgeführt werden.

**Patentansprüche**

1. Verfahren zur Herstellung von 3-Glycidyloxypropyltrialkoxysilanen der allgemeinen Formel

$$CH_2(O)CHCH_2\text{-}O\text{-}(CH_2)_3Si(OR)_3 \qquad (I),$$

in der R für einen Alkylrest steht, durch Umsetzung von Allylglycidylether

$$CH_2(O)CHCH_2\text{-}O\text{-}CH_2CH{=}CH_2 \qquad (II)$$

mit einem Trialkoxysilan der allgemeinen Formel

$$HSi(OR)_3 \qquad (III),$$

in der R wiederum einen Alkylrest bedeutet, in einer heterogenen, Platinkatalysierten Hydrosilylierungsreaktion,
**dadurch gekennzeichnet,**
**daß** die Reaktion an einem Katalysatorfestbett in einem Rohrreaktor mit oder ohne Kreislauf, einem Rohrbündelreaktor, einem Hordenreaktor oder einem Kreuzstromreaktor durchgeführt wird und man als Katalysator einen Platin(0)-Katalysator auf einem nichtmetallischen Trägerstoff eingesetzt, wobei der Massenanteil des Platins am Katalysator 0,01 bis 1,0% beträgt.

2. Verfahren nach Anspruch 1,
**dadurch gekennzeichnet,**
**daß** R für einen Alkylrest mit 1 bis 4 Kohlenstoffatomen steht.

3. Verfahren nach Anspruch 1,
**dadurch gekennzeichnet,**
**daß** R für einen Methyl- oder Ethylrest steht.

4. Verfahren nach einem der Ansprüche 1 bis 4,
**dadurch gekennzeichnet,**
**daß** der Allylglycidylether (II) und das Trialkoxysilan (III) in einem molaren Verhältnis von 0,1 bis 10 eingesetzt werden.

5. Verfahren nach Anspruch 4,
**dadurch gekennzeichnet,**
**daß** das molare Verhältnis 0,25 bis 4 beträgt.

6. Verfahren nach einem der Ansprüche 1 bis 5,
**dadurch gekennzeichnet,**
**daß** der Trägerstoff aus Aktivkohle, Aluminiumoxid oder Siliciumdioxid besteht und die spezifische Oberfläche des Katalysators zwischen 10 und 400 $m^2/g$ liegt.

7. Verfahren nach einem der Ansprüche 1 bis 6,
**dadurch gekennzeichnet,**
**daß** der Massenanteil des Platins an dem Katalysator 0,02 bis 0,1 % beträgt.

8. Verfahren nach Anspruch 6 oder 7,
**dadurch gekennzeichnet,**
**daß** der Katalysator halogenidfrei ist.

9. Verfahren nach einem der Ansprüche 1 bis 8,
**dadurch gekennzeichnet,**
**daß** die Reaktion bei einer Temperatur zwischen 20 und 200 °C und unter einem Druck von 1 bis 20 bar abs. durchgeführt wird.

10. Verfahren nach Anspruch 9,
**dadurch gekennzeichnet,**
**daß** die Temperatur zwischen 60 und 160 °C liegt.

## Claims

1. A process for preparing a 3-glycidyloxypropyltrialkoxysilane of the general formula

$$CH_2(O)CHCH_2\text{-}O\text{-}(CH_2)_3Si(OR)_3 \qquad (I),$$

in which R is an alkyl radical, by reacting allyl glycidyl ether

$$CH_2(O)CHCH_2\text{-}O\text{-}CH_2CH{=}CH_2 \qquad (II)$$

with a trialkoxysilane of the general formula

$$HSi(OR)_3 \qquad (III),$$

in which R is again an alkyl radical, in a heterogeneous, platinum-catalysed hydrosilylation reaction, **characterized in that** the reaction is conducted on a fixed bed of catalyst in a tubular reactor with or without circulation, in a tube-bundle reactor, in a tray reactor or in a crossflow reactor and **in that** the catalyst employed is a platinum(0) catalyst on a nonmetallic support, the proportion of platinum in the catalyst by mass being from 0.01 to 1.0%.

2. A process according to claim 1, **characterized in that** R is an alkyl radical of 1 to 4 carbon atoms.

3. A process according to claim 1, **characterized in that** R is a methyl or ethyl radical.

4. A process according to any one of claims 1 to 4, **characterized in that** the allyl glycidyl ether (II) and the trialkoxysilane (III) are employed in a molar ratio of from 0.1 to 10.

5. A process according to claim 4, **characterized in that** the molar ratio is from 0.25 to 4.

6. A process according to any one of claims 1 to 5, **characterized in that** the support consists of active carbon, alumina or silica and the specific surface area of the catalyst is from 10 to 400 $m^2/g$.

7. A process according to any one of claims 1 to 6, **characterized in that** the proportion of platinum in the catalyst by mass is from 0.02 to 0.1%.

8. A process according to claim 6 or 7, **characterized in that** the catalyst is free from halide.

9. A process according to any one of claims 1 to 8, **characterized in that** the reaction is conducted at a temperature of from 20 to 200°C and under a pressure of from 1 to 20 bar abs.

10. A process according to claim 9, **characterized in that** the temperature is from 60 to 160°C.

## Revendications

1. Procédé de préparation de 3-glycidyloxypropyltrialkoxysilanes de formule générale :

$$CH_2(O)CHCH_2\text{-}O\text{-}(CH_2)_3Si(OR)_3 \qquad (I)$$

dans laquelle R représente un reste allyle, par réaction d'un éther d'allylglycidyle:

$$CH_2(O)CHCH_2\text{-}O\text{-}CH_2CH{=}CH_2 \qquad (II)$$

avec un trialkoxysilane de formule générale :

$$HSi(OR)_3 \qquad (III)$$

dans laquelle R à nouveau signifie un reste alkoxy, dans une réaction d'hydrosilylation hétérogène catalysée par le platine,
**caractérisé en ce que**
la réaction est effectuée sur un lit fixe de catalyseur dans un réacteur tubulaire avec ou sans circuit, un réacteur à faisceau de tubes, un réacteur à grille, ou un réacteur à courants croisés, et on utilise comme catalyseur un catalyseur au platine (O) sur une substance de support non métallique dans lequel la proportion en masse du platine au catalyseur est de 0,01 à 1,0 %.

2. Procédé selon la revendication 1,
**caractérisé en ce que**
R représente un reste alkyle ayant de 1 à 4 atomes de carbone.

3. Procédé selon la revendication 1,
**caractérisé en ce que**
R représente un reste méthyle ou éthyle.

4. Procédé selon l'une quelconque des revendications 1 à 3,
**caractérisé en ce que**
l'éther d'allylglycidyle (II) et le trialkoxysilane (III) sont mis en oeuvre en un rapport molaire allant de 0,1 à 10.

5. Procédé selon la revendication 4,
**caractérisé en ce que**
le rapport molaire est de 0,25 à 4.

6. Procédé selon l'une quelconque des revendications 1 à 5,
**caractérisé en ce que**

la substance de support consiste en du charbon actif, de l'oxyde d'aluminium ou du dioxyde de silicium et la surface spécifique du catalyseur se situe entre 10 et 400 $m^2$/g.

**7.** Procédé selon l'une quelconque des revendications 1 à 6,
**caractérisé en ce que**
la proportion en masse du platine au catalyseur est de 0,02 à 0,1 %.

**8.** Procédé selon l'une quelconque des revendications 6 ou 7,
**caractérisé en ce que**
le catalyseur est dépourvu d'halogénure.

**9.** Procédé selon l'une quelconque des revendications 1 à 8,
**caractérisé en ce que**
la réaction est effectuée à une température comprise entre 20 et 200°C et sous une pression de 1 à 20 bars abs.

**10.** Procédé selon la revendication 9,
**caractérisé en ce que**
la température se situe entre 60 et 160°C.